# EUROPÄISCHE PATENTSCHRIFT

(11) **EP 1 030 888 B1**
(45) Veröffentlichungstag und Bekanntmachung des Hinweises auf die Patenterteilung: **20.02.2002**
(21) Anmeldenummer: 98961133.0
(22) Anmeldetag: 04.11.1998
(51) Int. Cl.: C08L 77/00, C08L 25/12

(54) **DIMENSIONSSTABILE THERMOPLASTISCHE FORMMASSEN**
DIMENSIONALLY STABLE THERMOPLASTIC MOULDING MATERIALS
MATIERES MOULABLES THERMOPLASTIQUES INDEFORMABLE

(30) Priorität: 15.11.1997 DE 19750725
(43) Veröffentlichungstag der Anmeldung: 30.08.2000
(73) Patentinhaber: BASF AKTIENGESELLSCHAFT, 67056 Ludwigshafen (DE)
(72) Erfinder: WEBER, Martin, D-67487 Maikammer (DE); WOLF, Peter, Grosse Ile, MI 48138 (US); GRUTKE, Stefan, D-67434 Neustadt (DE)
(86) Internationale Anmeldenummer: EP9807025
(87) Internationale Veröffentlichungsnummer: WO9925771

(56) Entgegenhaltungen:
- EP-A- 0 028 391
- EP-A- 0 312 930
- EP-A- 0 583 706
- DE-A- 3 200 428
- DE-A- 3 334 561
- US-A- 3 243 478
- DATABASE WPI Week 8050 Derwent Publications Ltd., London, GB; AN 80-89390c XP002103124 & JP 55 045576 B (ASAHI DOW) , 18. November 1980 in der Anmeldung erwähnt

## Beschreibung

Die Erfindung betrifft thermoplastische Formmassen, enthaltend
A) 10 bis 97,9 Gew.-% eines teilkristallinen Polyamids, verschieden von B)
B) 0,1 bis 50 Gew.-% eines Copolyamids, bestehend aus
   B₁) 60 bis 90 mol-% Einheiten, welche sich von ε-Caprolactam ableiten und
   B₂) 1 bis 50 mol-% Einheiten, welche sich von aliphatischen Dicarbonsäuren und aliphatischen Diaminen ableiten,
C) 1 bis 40 Gew. -% eines Kautschukfreien Copolymerisates auf der Basis von Styrol oder substituierten Styrolen und ungesättigten Nitrilen,
D) 1 bis 50 Gew.-% eines faserförmigen Füllstoffes,
E) 0 bis 30 Gew.-% weiterer Zusatzstoffe,
wobei die Gewichtsprozente der Komponenten A) bis E) 100 % ergeben.

Außerdem betrifft die Erfindung die Verwendung der erfindungsgemaßen Formmassen zur Herstellung von Fasern, Folien und Formkörpern sowie die hierbei erhältlichen Formkörper, insbesondere durch Zweikomponentenspritzguß erhältlichen oder verschweißten Formkörper.

Glasfaserverstärkte Polyamide finden aufgrund ihrer guten mechanischen Eigenschaften vielfältige Verwendung, insbesondere für hochbeanspruchte Teile in den Bereichen der Kfz- und Elektroindustrie sowie im Maschinen- und Apparatebau. Ein Nachteil glasfaserverstärkter Polyamide ist die hohe Verzugsneigung, die vor allem bei der Herstellung komplizierter Bauteile, die eventuell in Folgeschritten mit anderen Bauteilen durch Verschweißen, Verschrauben oder 2K-Spritzguß verbunden werden müssen, Schwierigkeiten bereitet.

Die Verzugsneigung ist außerdem bei der Herstellung flächiger oder runder Bauteile sowie Bauteilen mit hohen Anforderungen bei den Maßtoleranzen nachteilig.

EP-A-583706 beansprucht Polyamidformmassen aus 19-70 Gew.% Polyamid 66, 6-16 Gew.% eines Copolyamids enthaltend 80-98 Gew.% Einheiten abgeleitet von Lactamen und 20-2 Gew.% Einheiten abgeleitet von Azelainsäure und Hexamethylendiamin, 4-15 Gew. % eines Elastomeren und 50-20 Gew. % eines mineralischen Füllstoffs. Die Elastomere können Styrol und Acrylnitril Einheiten enthalten.

EP-A-28391 beansprucht Formmassen aus 95 60 Gew.% Polyamid 66, 5-40 Gew.% eines Copolyamids bestehend aus 95-50 Gew.% Caprolactam und 5-50 Gew.% Hexamethylendiaminadipat und 20-50 Gew.% silanmodifizierte Füllstoffe. Ein polymerer Schlagzähmodifikator, genannt werden Copolymere des Ethylens, kann ebenfalls anwesend sein.

DE-A-3200428 beansprucht mit 30 Gew.% Schnittglas verstärkte Polyamidformmassen, die ein teilkristallines Polyamid und 3-20 Gew. % eines amorphen Polyamids enthalten. Als teilkristalline Polyamide werden PA 66 und PA 6 genannt, als amorphes Polyamid wird in den Beispielen ein Copolyamid aus 85 Gew.% Caprolactam und 15 Gew.% Hexamethylendiamin/Adipinsäure eingesetzt. Es können geeignete Schlagzähmodifikatoren verwendet werden, wie z.B. Kautschuke.

Mischungen aus Polyamiden, Styrolcopolymeren und Glasfasern sind aus der JP-B 55/045 576 bekannt. Aus der US 3 243 478 sind Formmassen bestehend aus Polyamid, Styrolcopolymeren und Füllstoffen bekannt, die sich durch gute mechanische Eigenschaften und reduzierte Feuchtigkeitsaufnahme auszeichnen. Aus der DE-A 25 44 252 sind eingefärbte thermoplastische Formmassen bekannt, die neben Polyamid und Glasfasern auch Styrolcopolymere enthalten können. Gegenstand der DE-A 33 34 561 sind verstärkte thermoplastische Formmassen, die neben einem Polyamid auf Basis von Xylylendiamin (d.h. ein amorphes Polyamid) weitere Polyamide sowie ein Styrolcopolymer enthalten. Solche Formmassen lassen sich besonders gut beschichten.

Die bisher bekannten Formmassen weisen jedoch bezüglich Verzug und Schwindung noch Nachteile auf. Desweiteren genügt auch die Oberfläche der Produkte nicht den hohen Ansprüchen für Teile in sog. Sicht-Anwendungen. Dimensionsstabile thermoplastische Formmassen sind auch Gegenstand der JP-A 03/009 952, wobei die Verbesserung der Dimensionsstabilität durch die Verwendung eines amorphen Polyamids erreicht wird.

Aufgabe der vorliegenden Erfindung war es, thermoplastische faserverstärkte Polyamidformmassen zur Verfügung zu stellen, welche eine geringere Schwindung und Verzug sowie eine verbesserte Oberfläche und reduzierte Feuchtigkeitsaufnahme aufweisen. Gleichzeitig sollten die mechanischen Eigenschaften und die Wärmeformbeständigkeit weitestgehend erhalten bleiben.

Demgemäß wurden die eingangs definierten Formmassen gefunden. Bevorzugte Ausführungsformen sind den Unteransprüchen zu entnehmen.

Überraschenderweise führt die Kombination eines teilkristallinen Polyamids mit einem Copolyamid, welches im wesentlichen aus ε-Caprolactam-Einheiten aufgebaut ist, zu einer wesentlich geringeren Schwindung und Verzug nach der Verarbeitung.

Als Komponente A) enthalten die erfindungsgemäßen thermoplastischen Formmassen von 10 bis 97,9, vorzugsweise von 30 bis 89,5 und insbesondere von 30 bis 84 Gew.-% eines thermoplastischen teilkristallinen Polyamids.

Die Polyamide der erfindungsgemäßen Formmassen weisen im allgemeinen eine Viskositätszahl von 80 bis 350, vorzugsweise 110 bis 240 ml/g auf, bestimmt in einer 0,5 gew.-%-igen Lösung in 96 gew.%iger Schwefelsäure bei 25°C gemäß ISO 307.

Teilkristalline Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 4 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 4 bis 12, insbesondere 4 bis 8 Kohlenstoffatomen wie Hexamethylendiamin, 1,4-Diaminobutan, Di-(4-aminophenyl)methan, Di-(4-aminocyclohexyl)-methan, 2,2-Di-(4-aminophenyl)-propan oder 2,2-Di-(4-aminocyclohexyl)-propan.

Bevorzugte Polyamide sind Polyhexamethylenadipinsäureamid (PA 66), Polyhexamethylensebacinsäureamid (PA 610) und Polycaprolactam (PA 6) sowie PA 12, PA 69 und PA 11.

Außerdem seien auch noch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist. Die vorstehenden Copolymerisate sind verschieden von der Komponente B).

Hierunter sollen insbesondere solche teilaromatischen Copolyamide verstanden werden wie PA 6/6T und PA 66/6T, deren Triamingehalt weniger als 0,5, vorzugsweise weniger als 0,3 Gew.-% beträgt (siehe EP-A 299 444).

Die Herstellung der bevorzugten teilaromatischen Copolyamide mit niedrigem Triamingehalt kann nach den in den EP-A 129 195 und 129 196 beschriebenen Verfahren erfolgen.

Als Komponente B) enthalten die erfindungsgemäßen Formmassen 0,1 bis 50, vorzugsweise 0,5 bis 40 und insbesondere 1 bis 25 Gew.-% eines Copolyamids verschieden von A), bestehend aus
B₁) 60 bis 90, vorzugsweise 65 bis 85 und insbesondere 70 bis 85 mol-% Einheiten, welche sich von ε-Caprolactam ableiten und
B₂) 10 bis 40, vorzugsweise 15 bis 35 und insbesondere 15 bis 30 mol-% Einheiten, welche sich von aliphatischen Dicarbonsäuren und aliphatischen Diaminen ableiten.

Als Dicarbonsäuren sind Alkandicarbonsäuren mit 6 bis 12, insbesondere 6 bis 10 C-Atomen bevorzugt, wobei Adipinsäure besonders bevorzugt ist.

Als Diamine eignen sich Alkandiamine mit 6 bis 12, insbesondere 6 bis 8 Kohlenstoffatomen, wobei Hexamethylendiamin besonders bevorzugt ist.

Die Copolyamide, von denen PA 6/66 bevorzugt ist, weisen im allgemeinen eine Viskositätszahl von 100 bis 350, vorzugsweise von 120 bis 330 ml/g auf bestimmt in einer 0,5 gew.-%igen Lösung in 96 gew.-%iger Schwefelsäure bei 25°C gemäß ISO 307. Verfahren zur Herstellung derartiger Copolyamide sind dem Fachmann bekannt, weshalb sich weitere Einzelheiten hierzu erübrigen.

Als Komponente C) enthalten die erfindungsgemäßen Formmassen von 1 bis 40 Gew.-%, bezogen auf die Summe der Komponenten A bis E, mindestens eines Copolymerisates auf der Basis von Styrol oder substituierten Styrolen und ungesättigten Nitrilen. Bevorzugte erfindungsgemäße Formmassen enthalten die Komponente C in Anteilen von 5 bis 35, insbesondere von 5 bis 15 Gew.-%, bezogen auf die Summe der Komponente A bis E.

Die Copolymerisate C sind erfindungsgemäß aus
c₁) 60 bis 95 Gew.-%, vorzugsweise 63 bis 85 Gew.-% Styrol oder substituierten Styrolen der allgemeinen Formel I oder deren Mischungen 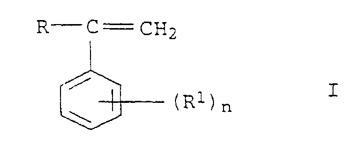 worin R einen C₁ - bis C₈-Alkylrest, bevorzugt Methyl oder Ethyl, oder Wasserstoff bedeutet und R¹ einen C₁- bis C₈-Alkylrest, bevorzugt Methyl oder Ethyl, darstellt und n den Wert 1, 2 oder 3 hat oder deren Mischungen und
C₂) 5 bis 40 Gew.-%, vorzugsweise 15 bis 37 Gew.-% mindestens eines ungesättigten Nitrils, bevorzugt Acrylnitril oder Methacrylnitril oder deren Mischungen sowie
C₃) 0 bis 35 Gew.-%, vorzugsweise 0 bis 22 Gew.-% weiterer copolymerisierbarer Monomerer
aufgebaut.

Die Copolymerisate C sind harzartig, thermoplastisch und kautschukfrei. Besonders bevorzugte Copolymerisate C sind solche aus Styrol und Acrylnitril, aus α-Methylstyrol und Acrylnitril oder aus Styrol, α-Methylstyrol und Acrylnitril. Es können auch mehrere der beschriebenen Copolymere gleichzeitig eingesetzt werden.

Als Komponente C₃) kommen beispielsweise Acrylsäure, Methacrylsäure bzw. deren Ester, Vinylphenol, Maleinsäureanhydrid, Glycidyl(meth)acrylat, Hydroxylethylacrylat, Vinylimidazol, Vinylpyrrolidon, Dimethylaminoethylacrylat, Isopropenyloxazolin, N-Phenylmaleinimid, N-Methylmaleinimid oder N-Cyclohexylmaleinimid oder deren Mischungen in Betracht.

Die Copolymerisate C sind an sich bekannt und lassen sich durch radikalische Polymerisation, insbesondere durch Emulsions-, Suspensions-, Lösungs- und Massepolymerisation herstellen. Sie weisen Viskositätszahlen im Bereich von 40 bis 160 auf, dies entspricht mittleren Molekulargewichten M_{w} (Gewichtsmittelwert) von 40 000 bis 2 000 000.

Als Komponente D) enthalten die erfindungsgemäßen Formmassen 1 bis 50, bevorzugt 5 bis 45 und insbesondere 10 bis 35 Gew.-% eines teilchen- oder faserförmigen Füllstoffes oder deren Mischungen.

Als bevorzugte faserförmige Füllstoffe seien Kohlenstoffasern, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit dem Thermoplasten mit einer Silanverbindung oberflächlich vorbehandelt sein.

Geeignete Silanverbindungen sind solche der allgemeinen Formel II

(X- (CH₂)ₙ)ₖ-Si-(O-CₘH₂ₘ₊₁)₄₋ₖ II

in der die Substituenten folgende Bedeutung haben:
- X: 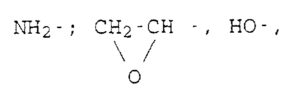
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im allgemeinen in Mengen von 0,05 bis 5, vorzugsweise 0,5 bis 1,5 und insbesondere 0,8 bis 1 Gew.-% (bezogen auf D) zur Oberflächenbeschichtung eingesetzt.

Geeignet sind auch nadelförmige oder teilchenförmige Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als teilchenförmige Füllstoffe seien weiterhin Kaolin, Glimmer, Talkum, Wollastonit, Montmorillonit, calciniertes Kaolin und Kreide genannt.

Als Komponente E) können die erfindungsgemäßen Formmassen bis zu 30, vorzugsweise bis zu 20 Gew.-% weiterer Zusatzstoffe enthalten. Als Beispiel seien in Mengen von 0 bis 2 Gew.-% fluorhaltige Ethylenpolymerisate genannt. Hierbei handelt es sich um Polymerisate des Ethylens mit einem Fluorgehalt von 55 bis 76 Gew.-%, vorzugsweise 70 bis 76 Gew.-%.

Beispiele hierfür sind Polytetrafluorethylen (PTFE), Tetrafluorethylen-Copolymere oder Tetrafluorethylen-Copolymerisate mit kleineren Anteilen (in der Regel bis zu 50 Gew.-%) copolymerisierbarer ethylenisch ungesättigter Monomerer. Diese werden z.B. von Schildknecht in "Vinyl and Related Polymers", Wiley-Verlag, 1952, Seiten 484 bis 494, und von Wall in "Fluorpolymers" (Wiley Interscience, 1972) beschrieben.

Diese fluorhaltigen Ethylenpolymerisate liegen homogen verteilt in den Formmassen vor und weisen bevorzugt eine Teilchengröße d₅₀ (Zahlenmittelwert) im Bereich von 0,05 bis 10 µm, insbesondere von 0,1 bis 5 µm auf. Diese geringen Teilchengrößen lassen sich besonders bevorzugt durch Verwendung von wäßrigen Dispersionen von fluorhaltigen Ethylenpolymerisaten und deren Einarbeitung z.B. in eine Polyamidschmelze erzielen.

Als Zusatzstoffe seien Schlagzähmodifier genannt (auch als kautschukelastische Polymerisate oder Elastomere bezeichnet), die in Mengen bis zu 20 Gew.-%, bevorzugt bis zu 15 Gew.-% enthalten sein können.

Geeignet sind übliche Kautschuke, z. B. Ethylencopolymere mit reaktiven Gruppen, Acrylatkautschuk und Polymerisate konjugierter Diene, wie Polybutadienkautschuk und Polyisoprenkautschuk. Die Dienpolymerisate können, in an sich bekannter Weise, teilweise oder vollständig hydriert sein. Außerdem kommen z. B. in Betracht: hydrierter Styrolbutadienkautschuk, Ethylen-Propylen-Dien-Kautschuk, Polybutylen- und Polyoctenamerkautschuke, Ionomere, Blockcopolymere aus vinylaromatischen Monomeren mit Dienen wie Butadien oder Isopren (an sich bekannt aus EP-A 62 282) mit dem Aufbau M¹M²-, M¹M²M¹M²- oder M¹M²M¹-, wobei diese Blockpolymerisate auch Segmente mit statistischer Verteilung enthalten können, sowie Stern-Block-Copolymere. Als besonders geeignet haben sich Polymerisate konjugierter Diene wie Polybutadienkautschuk oder Polyisoprenkautschuk erwiesen. Derartige synthetische Kautschuke sind dem Fachmann geläufig und zusammengefaßt in "Ullmanns Encyklopädie der Technischen Chemie", 4. Auflage, Bd. 13, Seiten 595 bis 634, Verlag Chemie GmbH, Weinheim 1977, beschrieben.

Insbesonders bevorzugt sind Pfropfkautschuke wie ABS- oder ASA-Polymerisate, Als ABS- oder ASA-Polymerisate werden ganz allgemein Mischungen aus Pfropfpolymerisaten mit einer "weichen" Pfropfgrundlage, deren Glasübergangstemperatur (T_{g}) im Regelfall unter 10°C liegt und einer darauf aufgepfropften Hülle aus Monomeren, deren Polymerisate eine Glasübergangstemperatur von im allgemeinen mehr als 25°C aufweisen. Daneben enthalten ABS- bzw. ASA-Polymerisate im allgemeinen noch Copolymere aus den Monomeren, die die Pfropfhülle des Pfropfcopolymerisats bilden, als sog. "Hartkomponente".

ABS und ASA-Polymerisate unterscheiden sich im wesentlichen in der chemischen Zusammensetzung der Pfropfgrundlage - in ASA-Polymerisaten werden Acrylatkautschuke eingesetzt, in ABS-Polymerisaten Dienkautschuke, insbesondere auf der Basis von Butadien.

Nachfolgend seien einige bevorzugte ASA-Polymerisate etwas detaillierter beschrieben; die entsprechenden Ausführungen gelten auch für ABS-Polymerisate, wenn als Komponenten für die Pfropfgrundlage statt Acrylsäureestern Butadien oder Mischungen aus Butadien und Styrol, Acrylnitril oder kleineren Anteilen weiterer copolymerisierbarer Monomerer eingesetzt werden. Die zwingende Mitverwendung der als Vernetzer fungierenden Monomeren p₁₂ ist bei Butadienpolymerisaten nicht erforderlich, da Butadien unter geeigneten Bedingungen selbst vernetzend wirkt.

Bevorzugte ASA-Polymerisate P enthalten ein Pfropfcopolymerisat aufgebaut aus
p₁) 50 bis 90 Gew.-% einer Pfropfgrundlage auf Basis von
   p₁₁) 95 bis 99,9 Gew.-% eines C₂-C₁₀-Alkylacrylats und
   p₁₂) 0,1 bis 5 Gew.-% eines polyfunktionellen, vorzugsweise difunktionellen Monomeren mit mindestens zwei olefinischen, nicht konjugierten Doppelbindungen, und
p₂) 10 bis 50 Gew.-% einer Pfropfauflage aus
   p₂₁) 50 bis 90 Gew.-% Styrol oder substituierten Styrolen der allgemeinen Formel III oder deren Mischungen, und 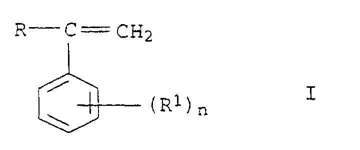
   p₂₂) 10 bis 50 Gew.-% Acrylnitril oder Methacrylnitril oder deren Mischungen.

Bei der Komponente p₁) handelt es sich um ein Elastomeres, welches eine Glasübergangstemperatur von unter -20, insbesondere unter -30°C aufweist.

Als Monomere für die Herstellung des Elastomeren werden als Hauptmonomere p₁₁) Ester der Acrylsäure mit 2 bis 10 C-Atomen, insbesondere 4 bis 8 C-Atomen eingesetzt. Als besonders bevorzugte Monomere seien hier tert.-, iso- und n-Butylacrylat sowie 2-Ethylhexylacrylat genannt, von denen die beiden letztgenannten besonders bevorzugt werden.

Neben diesen Estern der Acrylsäure werden 0,1 bis 5, insbesondere 1 bis 4 Gew.-%, bezogen auf das Gesamtgewicht p₁₁ + p₁₂, eines polyfunktionellen Monomeren mit mindestens zwei olefinischen, nicht konjugierten Doppelbindungen eingesetzt. Von diesen werden difunktionelle Verbindungen, d.h. mit zwei nicht konjugierten Doppelbindungen, bevorzugt verwendet. Beispielsweise seien hier Divinylbenzol, Diallylfumarat, Diallylphthalat, Triallylcyanurat, Triallylisocyanurat, Tricyclodecenylacrylat und Dihydrodicyclopentadienylacrylat genannt, von denen die beiden letzten besonders bevorzugt werden.

Verfahren zur Herstellung der Pfropfgrundlage p₁) sind an sich bekannt und z.B. in der DE-B-12 60 135 beschrieben. Entsprechende Produkte sind auch kommerziell im Handel erhältlich.

Als besonders vorteilhaft hat sich in einigen Fällen die Herstellung durch Emulsionspolymerisation erwiesen.

Der Anteil der Pfropfgrundlage p₁) am Pfropfpolymerisat P beträgt im allgemeinen 50 bis 90, vorzugsweise 55 bis 85 und insbesondere 60 bis 80 Gew.-%, bezogen auf das Gesamtgewicht von P.

Auf die Pfropfgrundlage p₁) ist eine Pfropfhülle p₂) aufgepfropft, die durch Copolymerisation von
p₂₁) 50 bis 90, vorzugsweise 60 bis 90 und insbesondere 65 bis 80 Gew.-% Styrol oder substituierten Styrolen der allgemeinen Formel I 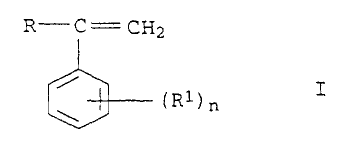 wobei R einen Alkylrest mit 1 bis 8 C-Atomen, ein Wasserstoffatom oder Halogen und R⁵ Alkylreste mit 1 bis 8 C-Atomen oder ein Halogenatom darstellen und n den Wert 0, 1, 2 oder 3 hat, und
p₂₂) 10 bis 50, vorzugsweise 10 bis 40 und insbesondere 20 bis 35 Gew.-% Acrylnitril oder Methacrylnitril oder deren Mischungen
erhältlich ist.

Die Pfropfhülle p₂) kann in einem oder in mehreren, z.B. zwei oder drei, Verfahrensschritten hergestellt werden, die Bruttozusammensetzung bleibt davon unberührt.

Vorzugsweise wird die Pfropfhülle in Emulsion hergestellt, wie dies z.B. in der DE-PS 12 60 135, DE-OS 32 27 555, DE-OS 31 49 357, DE-OS 34 14 118 beschrieben ist.

Je nach den gewählten Bedingungen entsteht bei der Pfropfmischpolymerisation ein bestimmter Anteil an freien Copolymerisaten von Styrol und Acrylnitril.

Zum Pfropfpolymerisat P zählen im allgemeinen auch die bei der Pfropfmischpolymerisation zur Herstellung der Komponente p₂) entstehenden freien, nicht gepfropften Homo- und Copolymerisate, deren Anteil an der Komponente P von den Bedingungen bei der Herstellung der Pfropfauflage abhängt.

Nachstehend seien einige bevorzugte Pfropfpolymerisate angeführt:
1. 65 Gew.-% Pfropfgrundlage p₁) aus
   p₁₁) 98 Gew.-% n-Butylacrylat und
   p₁₂) 2 Gew.-% Dihyroxydicyclopentadienylacrylat und
      35 Gew.-% Pfropfhülle p₂) aus
   p₂₁) 70 Gew.-% Styrol und
   p₂₂) 30 Gew.-% Acrylnitril
2. Pfropfgrundlage wie bei 1. mit 5 Gew.-% einer 1. Pfropfhülle aus
   Styrol (1. Pfropfstufe) und
   35 Gew.-% einer zweiten Pfropfstufe aus
   p₂₁) 70 Gew.-% Styrol und
   p₂₂) 30 Gew.-% Acrylnitril
3. Pfropfgrundlage wie bei 1. mit 13 Gew.-% einer ersten Pfropfstufe aus Styrol und 27 Gew.-% einer zweiten Pfropfstufe aus Styrol und Acrylnitril im Gewichtsverhältnis 3:1

Als Komponente P' können die bevorzugten ASA-Polymerisate ein Copolymerisat aus
p'₁) 50 bis 90, vorzugsweise 55 bis 90 und insbesondere 65 bis 85 Gew.-% Styrol und/oder substituierten Styrolen der allgemeinen Formel I und
p'₂) 10 bis 50, vorzugsweise 10 bis 45 und insbesondere 15 bis 35 Gew.-% Acrylnitril und/oder Methacrylnitril
enthalten.

Derartige Produkte können z.B. nach dem in den DE-AS 10 01 001 und DE-AS 10 03 436 beschriebenen Verfahren hergestellt werden. Auch im Handel sind solche Copolymere erhältlich. Vorzugsweise liegt der durch Lichtstreuung bestimmte Gewichtsmittelwert des Molekulargewichts im Bereich von 50 000 bis 500 000, insbesondere von 100 000 bis 250 000.

Das Gewichtsverhältnis von Pfropfcopolymerisat P und Copolymerisat P' in den ABS- und ASA-Polymeren liegt im allgemeinen im Bereich von 20:80 bis 80:20, vorzugsweise von 30:70 bis 70:30.

ASA-Polymerisate sind unter der Bezeichnung Luran® S und ABS-Polymerisate unter der Bezeichnung Terluran® jeweils von BASF Aktiengesellschaft erhältlich.

Als weitere Zusatzstoffe seien genannt Hitze- und Lichtstabilisatoren, Gleit- und Entformungsmittel, Färbemittel, wie Farbstoffe und Pigmente in üblichen Mengen.

Zusätzliche Pigmente und Farbstoffe sind allgemein in Mengen bis zu 2, bevorzugt bis 1 und insbesondere bis 0,5 Gew.-% enthalten. Derartige Pigmente führen zu einer Farbvertiefung oder zu unterschiedlichen matten Abstufungen der schwarzen Farbe und sind allgemein bekannt, siehe z.B. R. Gächter und H. Müller, Taschenbuch der Kunststoffadditive, Carl Hanser Verlag, 1983, S. 494 bis 510. Als erste bevorzugte Gruppe von Pigmenten sind Weißpigmente zu nennen wie Zinkoxid, Zinksulfid, Bleiweiß (2 PbCO₃·Pb(OH)₂), Lithopone, Antimonweiß und Titandioxid. Von den beiden gebräuchlichsten Kristallmodifikationen (Rutil- und Anatas-Typ) des Titandioxids wird insbesondere die Rutilform zur Nuancierung der erfindungsgemäßen Formmassen verwendet.

Schwarze Farbpigmente, die erfindungsgemäß eingesetzt werden können, sind Eisenoxidschwarz (Fe₃O₄), Spinellschwarz (Cu,(Cr,Fe)₂O₄), Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), S. 78ff). Als organischer Schwarzfarbstoff sei z.B. Nigrosin genannt.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-Halogeniden, z.B. Chloriden, Bromiden oder Iodiden. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, sog. HALS-Typen (hindered amine light stabilizer) und Mischungen dieser Verbindungen, vorzugsweise in Konzentrationen bis zu 1 Gew.%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.% eingesetzt werden.

Als Antistatika für SAN seien beispielsweise Kokosfettdiethanolamin und Natriumalkylsulfonate genannt.

Gleit- und Entformungsmittel, die in der Regel in Mengen bis zu 1 Gew.% der thermoplastischen Masse zugesetzt werden, sind Stearinsäure, Stearylalkohol, Octadecylalkohol, Stearinsäurealkylester und -amide, Ethylenbisstearylamid sowie Ester des Pentaerythrits mit langkettigen Fettsäuren. Es können auch Salze des Calciums, Zinks oder Aluminiums der Stearinsäure sowie Dialkylketone, z.B. Distearylketon, eingesetzt werden.

Als Flammschutzmittel seien beispielsweise roter Phosphor, Phosphorverbindungen, Melamincyanurat, Erdalkalicarbonate, Magnesiumhydroxid oder halogenhaltige wie Decabromdiphenylethan genannt, welche in Mengen bis zu 20 vorzugsweise bis zu 15 Gew.-% eingesetzt werden können.

Unter den Zusatzstoffen sind auch Stabilisatoren, die die Zersetzung des roten Phosphors in Gegenwart von Feuchtigkeit und Luftsauerstoff verhindern. Als Beispiele seien Verbindungen des Cadmiums, Zinks, Aluminiums, Zinns, Magnesiums, Mangans und Titans genannt. Besonders geeignete Verbindungen sind z.B. Oxide der genannten Metalle, ferner Carbonate oder Oxicarbonate, Hydroxide sowie Salze organischer oder anorganischer Säuren wie Acetate oder Phosphate bzw. Hydrogenphosphate.

Auch niedermolekulare Polymere kommen als Zusatzstoffe in Betracht, wobei Polyethylenwachs als Gleitmittel besonders bevorzugt ist.

Über Art und Menge dieser Zusatzstoffe lassen sich die gewünschten Eigenschaften der Endprodukte in weitem Maße steuern.

Die Herstellung der erfindungsgemäßen Formmassen kann nach an sich bekannten Verfahren erfolgen. Nach einer bevorzugten Ausführungsform erfolgt die Herstellung durch Zugabe der Komponenten D) bis E), zur Schmelze der Komponenten A), B) und C).

Zweckmäßigerweise verwendet man hierzu Extruder, z.B. Einschnekken- oder Zweischneckenextruder oder andere herkömmliche Plastifizierungsvorrichtungen wie Brabender-Mühlen oder Banbury-Mühlen.

Die Polyamidmischungen kann man danach einer weiteren thermischen Behandlung, d.h. einer Nachkondensation in fester Phase unterwerfen. In Temperaggregaten wie z.B. einem Taumler-Mischer oder kontinuierlich sowie diskontinuierlich betriebenen Temperrohren tempert man die in der jeweiligen Bearbeitungsform vorliegende Formmasse, bis die gewünschte Viskositätszahl VZ oder relative Viskosität ηrel z.B. des Polyamids erreicht wird. Der Temperaturbereich der Temperung hängt vom Schmelzpunkt der reinen Komponente A) ab. Bevorzugte Temperaturbereiche sind 5 bis 50, vorzugsweise 20 bis 30°C unterhalb des jeweiligen Schmelzpunkts von A). Das Verfahren erfolgt vorzugsweise in einer Inertgasatmosphäre, wobei Stickstoff und überhitzter Wasserdampf als Inertgase bevorzugt sind.

Die Verweilzeiten betragen im allgemeinen von 0,5 bis 50, vorzugsweise 4 bis 20 Stunden. Anschließend werden aus den Formmassen mittels üblicher Vorrichtungen Formteile hergestellt.

Die erfindungsgemäßen Formmassen zeichnen sich durch eine sehr geringe Schwindung und Verzug nach der Verarbeitung aus. Die mechanischen Eigenschaften der Formkörper bleiben weitestgehend erhalten und die Oberflächeneigenschaften sowie die Feuchtigkeitsaufnahme sind deutlich verbessert bzw. reduziert.

Deshalb eignen sich die erfindungsgemäßen Formmassen zur Herstellung von Fasern, Folien und Formkörpern jeglicher Art. Insbesondere Formkörper, welche durch Verschweißen und/oder 2K-Spritzguß und/oder Verschrauben sowie mittels sonstiger bekannter Fügetechniken wie Verkleben, Nieten oder Bördeln verbunden bzw. hergestellt werden, sind bevorzugte Anwendungen, welche insbesondere in der KFZ-Industrie, z.B. als Türgriffe, Außenspiegel, Saugrohre und Getriebekästen verwendet werden.

### Beispiele

### Komponente A

A1: Poly-ε-caprolactam (PA6) mit einer Viskositätszahl (VZ) von 150 ml/g, bestimmt gemäß ISO 307 als 0,5 gew.-%ige Lösung in 96 gew.-%iger Schwefelsäure bei 25°C (Ultramid® B3 der BASF AG).
A2: Polyhexamethylenadipinsäureamid (PA 66) mit einer VZ von 150 ml/g gemäß ISO 307 (Ultramid® A3 der BASF AG).

### Komponente B1

Copolyamid bestehend aus 80 mol-% Einheiten, welche sich von ε-Caprolactam ableiten sowie 20 mol-% Einheiten, welche sich von Hexamethylendiamin/Adipinsäure ableiten, charakterisiert durch eine Viskositätszahl von 195 ml/g, gemäß ISO 307.

### Komponente B1V

Copolyamid bestehend aus 55 mol-% Einheiten, welche sich von ε-Caprolactam ableiten sowie 45 mol-% Einheiten, welche sich von Hexamethylendiamin/Adipinsäure ableiten, charakterisiert durch eine Viskositätszahl von 190 ml/g, gemäß ISO 307.

### Komponente B2V

Copolyamid bestehend aus 95 mol-% Einheiten, welche sich von ε-Caprolactam ableiten sowie 5 mol-% Einheiten, welche sich von Hexamethylendiamin/Adipinsäure ableiten, charakterisiert durch eine Viskositätszahl von 192 ml/g, gemäß ISO 307.

### Komponente C

Copolymer aus 75 Gew.-% Styrol und 25 Gew.-% Acrylnitril, charakterisiert durch eine Viskositätszahl von 80 ml/g (gemessen in einer 0,5 gew.-%igen Lösung in Dimethylformamid bei 23°C).

### Komponente D

Kurzglasfaser (Faserdurchmesser von 10 µm) und einer Stapellänge von 4,5 mm und einer Aminosilanschlichte.

### Komponente E1

Ruß Black Pearls 880, Fa. Cabot, als 30 Gew.-%iger Batch in Polyethylen.

### Komponente E2

CuI in Komponente A1 dispergiert, Gehalt an Cu: 1,5 Gew.-%.

### Herstellung und Prüfung der Formmassen

Die Komponenten wurden in einem Zweiwellenextruder bei einer Massetemperatur von 280°C gemischt. Die Schmelze wurde durch ein Wasserbad geleitet und granuliert.

Die Verarbeitung zu Formkörpern erfolgte bei einer Massetemperatur von 280°C und einer Werkzeugtemperatur von 60°C.

Die Wärmeformbeständigkeit der Proben wurde mittels der Vicat-Erweichungstemperatur ermittelt. Die Vicat-Erweichungstemperatur wurde nach DIN 53 460, mit einer Kraft von 49,05 N und einer Temperatursteigerung von 50 K je Stunde, an Normkleinstäben ermittelt.

Die E-Moduli und Reißfestigkeiten wurden im Zugversuch an Schulterstäben nach ISO 527 ermittelt.

Die Beurteilung des Schwindungs- und Verzugsverhaltens wurde an Platten des Formats 110 x 110 x 3 mm durchgeführt, wobei die Schwindungswerte bezüglich Länge und Breite (angußnah, angußfern) bestimmt wurden.

Die Oberflächenqualität der Platten wurde qualitativ beurteilt (+: gut, o: befriedigend, -: schlecht).

Die Zusammensetzungen der Formmassen und die Ergebnisse der Prüfungen sind der Tabelle 1 zu entnehmen.

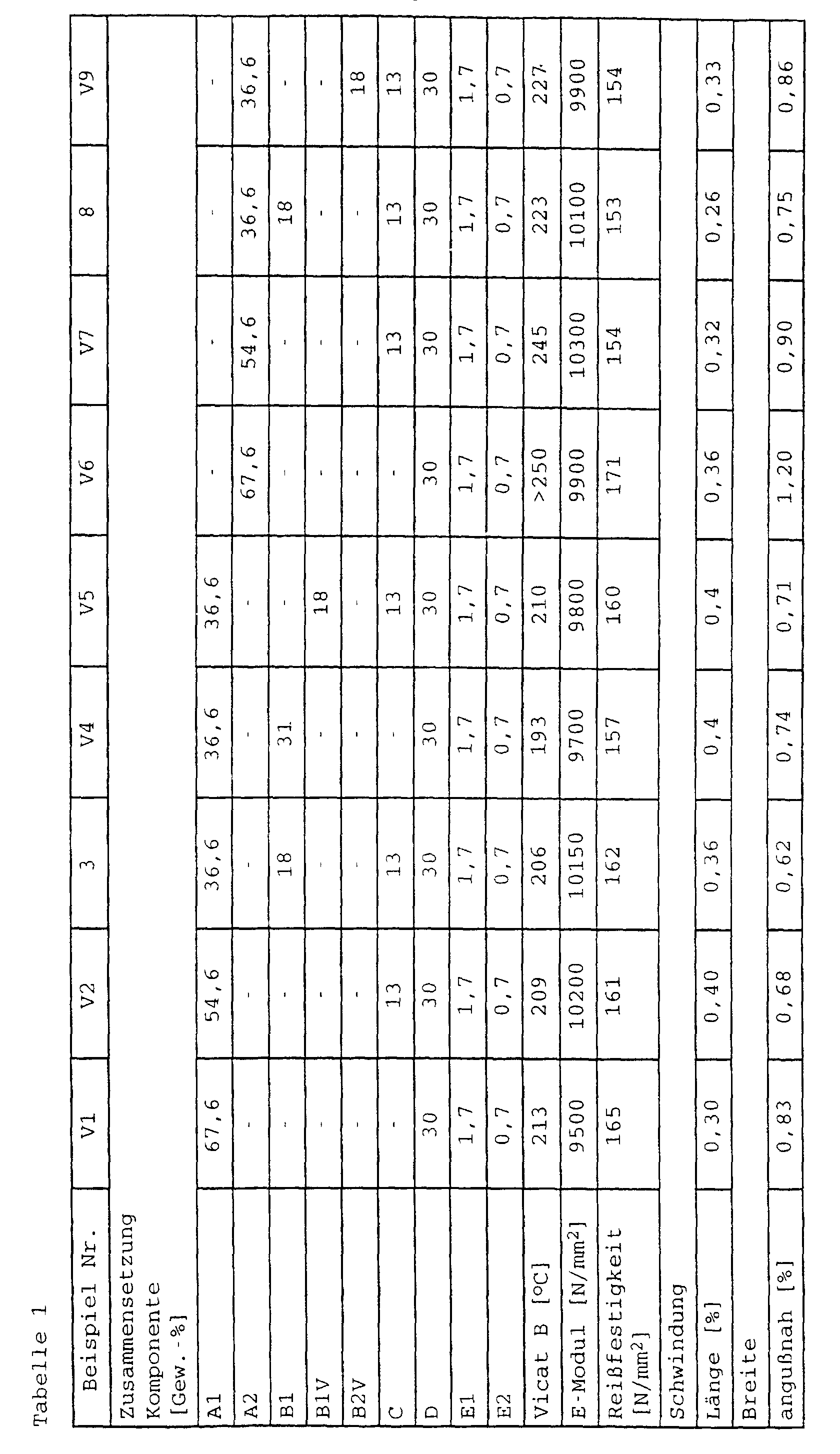

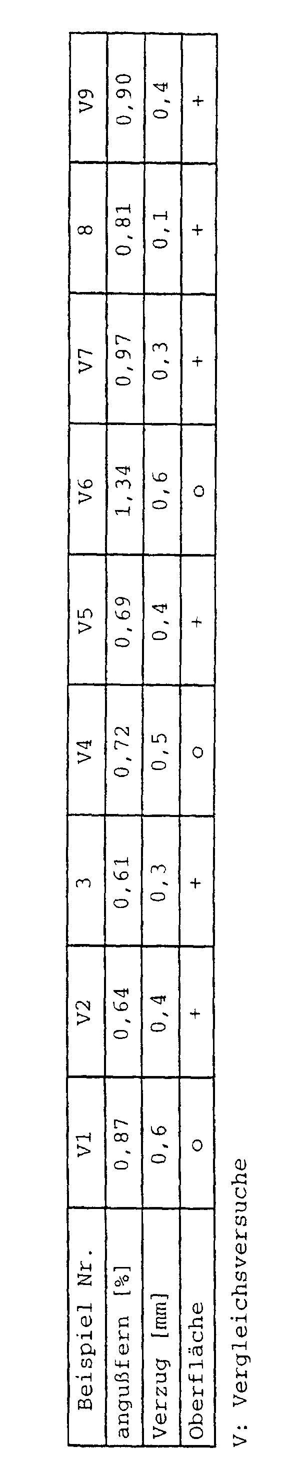

## Patentansprüche

1. Thermoplastische Formmassen, enthaltend
A) 10 bis 97,9 Gew.-% eines teilkristallinen Polyamids, verschieden von B)
B) 0,1 bis 50 Gew.-% eines Copolyamids, bestehend aus
B₁) 60 bis 90 mol-% Einheiten, welche sich von ε-Caprolactam ableiten und
B₂) 10 bis 40 mol-% Einheiten, welche sich von aliphatischen Dicarbonsäuren und aliphatischen Diaminen ableiten,
C) 1 bis 40 Gew.-% eines kautschukfreien Copolymerisates auf der Basis von Styrol oder substituierten Styrolen und ungesättigten Nitrilen,
D) 1 bis 50 Gew.-% eines teilchen- oder faserförmigen Füllstoffes oder deren Mischungen,
E) 0 bis 30 Gew.-% weiterer Zusatzstoffe,
wobei die Gewichtsprozente der Komponenten A) bis E) 100 % ergeben.

2. Thermoplastische Formmassen nach Anspruch 1, enthaltend als Polyamid A) PA 6, PA 66, PA 6/6T, PA 66/6T, PA 69 oder PA 12 oder deren Mischungen.

3. Thermoplastische Formmassen nach den Ansprüchen 1 oder 2, in denen die Einheiten B₂) aus Hexamethylendiamin und Adipinsäure aufgebaut sind.

4. Thermoplastische Formmassen nach den Ansprüchen 1 bis 3, in denen die Komponente C) aufgebaut ist aus
C₁) 60 bis 95 Gew.-% Styrol oder substituierten Styrolen der allgemeinen Formel I oder deren Mischungen 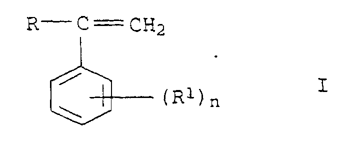 worin R einen Alkylrest mit 1 bis 8 C-Atomen oder ein Wasserstoffatom und R¹ einen Alkylrest mit 1 bis 8 C-Atomen darstellen und n den Wert 1, 2 oder 3 hat und
C₂) 5 bis 40 Gew.-% eines ungesättigten Nitrils oder deren Mischungen sowie
C₃) 0 bis 35 Gew.-% weiterer copolymerisierbarer Monomerer.

5. Thermoplastische Formmassen nach den Ansprüchen 1 bis 4, in denen die Monomeren C₂) aus Acrylnitril oder Methacrylnitril oder deren Mischungen aufgebaut sind.

6. Thermoplastische Formmassen nach den Ansprüchen 1 bis 5, in denen die Komponente D) oberflächlich vorbehandelt mit Silanverbindungen der allgemeinen Formel II ist
(X- (CH₂)ₙ)ₖ-Si-(O-CₘH₂ₘ₊₁)₄₋ₖ II
in der die Substituenten folgende Bedeutung haben:
X 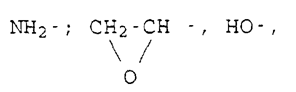
n eine ganze Zahl von 2 bis 10, bevorzugt 3 bis 4
m eine ganze Zahl von 1 bis 5, bevorzugt 1 bis 2
k eine ganze Zahl von 1 bis 3, bevorzugt 1

7. Verwendung der thermoplastischen Formmassen gemäß den Ansprüchen 1 bis 6 zur Herstellung von Formkörpern, Fasern und Folien.

8. Formkörper erhältlich aus den thermoplastischen Formmassen gemäß den Ansprüchen 1 bis 6.

9. Türgriffe, Außenspiegel, Getriebekästen, Saugrohre, verschweißte, verschraubte, durch 2K-Spritzguß erhältliche Formkörper erhältlich aus den thermoplastischen Formmassen gemäß den Ansprüchen 1 bis 6.

## Claims

1. A thermoplastic molding composition comprising
A) from 10 to 97.9% by weight of a partly crystalline polyamide which is different from B),
B) from 0.1 to 50% by weight of a copolyamide composed of
B₁) from 60 to 90 mol% of units derived from ε-caprolactam and
B₂) from 10 to 40 mol% of units derived from aliphatic dicarboxylic acids and from aliphatic diamines,
C) from 1 to 40% by weight of a rubber-free copolymer based on styrene or on substituted styrenes and on unsaturated nitriles,
D) from 1 to 50% by weight of a particulate or fibrous filler or mixtures of these and
E) from 0 to 30% by weight of other additives,
where the percentages by weight of components A) to E) are 100% in total.

2. A thermoplastic molding composition as claimed in claim 1, containing, as polyamide A), nylon-6, nylon-6,6, nylon-6/6,T, nylon-6,6/6,T, nylon-6,9 or nylon-12, or mixtures of these.

3. A thermoplastic molding composition as claimed in claim 1 or 2, in which the units B₂) are built up from hexamethylenediamine and adipic acid.

4. A thermoplastic molding composition as claimed in any of claims 1 to 3, in which component C) is built up from
C₁) from 60 to 95% by weight of styrene or substituted styrenes of the formula I or mixtures of these 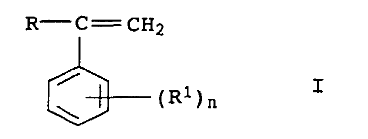 where R is alkyl having from 1 to 8 carbon atoms or hydrogen and R¹ is alkyl having from 1 to 8 carbon atoms, and n is 1, 2 or 3, and
C₂) from 5 to 40% by weight of an unsaturated nitrile or mixtures of these, and also
C₃) from 0 to 35% by weight of other copolymerizable monomers.

5. A thermoplastic molding composition as claimed in any of claims 1 to 4, in which the monomers C₂) are composed of acrylonitrile or methacrylonitrile or mixtures of these.

6. A thermoplastic molding composition as claimed in any of claims 1 to 5, in which component D) has been pretreated on its surface with silane compounds of the formula II
(X-(CH₂)ₙ)ₖ-Si-(O-CₘH₂ₘ₊₁)₄₋ₖ II
where the substituents are:
X: 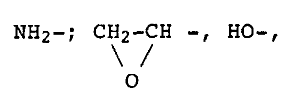
n: an integer from 2 to 10, preferably 3 or 4
m: an integer from 1 to 5, preferably 1 or 2, and
k: an integer from 1 to 3, preferably 1.

7. The use of the thermoplastic molding composition as claimed in any of claims 1 to 6 for producing moldings, fibers and films.

8. A molding obtainable from the thermoplastic molding composition as claimed in any of claims 1 to 6.

9. A door handle, an exterior mirror, a transmission or gear casing, a suction pipe, and a welded or screwed molding, and a molding obtainable by two-component injection molding, obtainable from the thermoplastic molding composition as claimed in any of claims 1 to 6.

## Revendications

1. Masses de moulage thermoplastiques, contenant
A) 10 à 97,9% en poids d'un polyamide cristallin, différent de B)
B) 0,1 à 50% en poids d'un copolyamide constitué de
B₁) 60 à 90% molaires d'unités dérivées du ε-caprolactame et
B₂) 10 à 40% molaires d'unités dérivées d'acides dicarboxyliques aliphatiques et de diamines aliphatiques,
C) 1 à 40% en poids d'un copolymère sans caoutchouc à base de styrène ou de styrènes substitués et de nitriles insaturés,
D) 1 à 50% en poids d'une charge particulaire ou fibreuse, ou de leurs mélanges,
E) 0 à 30%en poids d'autres additifs,
les pourcentages en poids des composants A) à E) totalisant 100%.

2. Masses de moulages thermoplastiques selon la revendication 1, contenant en tant que polyamide A) du PA 6, PA 66, PA 6/6T, PA 66/6T, PA 69 ou PA 12, ou leurs mélanges.

3. Masses de moulages thermoplastiques selon la revendication 1 ou 2, dans lesquelles les unités B₂) sont constituées d'hexaméthylènediamine et d'acide adipique.

4. Masses de moulages thermoplastiques selon les revendications 1 à 3, dans lesquelles le composant C) est constitué de
C₁) 40 à 95% en poids de styrène ou de styrènes substitués de la formule générale I, ou leurs mélanges, 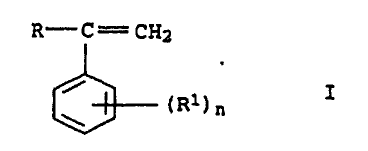 où R est un radical alkyle comportant de 1 à 8 atomes de carbone, ou un atome d'hydrogène, et R¹ est un radical alkyle comportant de 1 à 8 atomes de carbone, et n a une valeur de 1, 2 ou 3, et
C₂) 5 à 40% en poids d'un nitrile insaturé ou de mélanges de ceux-ci, ainsi que
C₃) 0 à 35% en poids d'autres monomères copolymérisables.

5. Masses de moulage thermoplastiques selon les revendications 1 à 4, dans lesquelles le monomère C₂) est constitué d'acrylonitrile ou de méthacrylonitrile, ou leurs mélanges.

6. Masses de moulage thermoplastiques selon les revendications 1 à 5, dans lesquelles le composant D) est prétraité en surface par des composés de silane de la formule générale II
(X - (CH₂)ₙ)ₖ - Si - (O - CₘH₂₊ₘ)₄₋ₖ II
dans laquelle les substituants ont les significations suivantes:
X représente 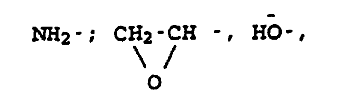
n est un nombre entier de 2 à 10, de préférence de 3 à 4
m est un nombre entier de 1 à 5, de préférence de 1 à 2
k est un nombre entier de 1 à 3, de préférence 1

7. Utilisation des masses de moulage thermoplastiques selon les revendications 1 à 6 pour la production de corps façonnés, fibres et feuilles.

8. Corps façonnés que l'on peut obtenir à partir des masses de moulage thermoplastiques selon les revendications 1 à 6.

9. Poignées de portières, rétroviseurs extérieurs, carters de boîtes de vitesses, tubulures d'admission, corps façonnés soudés, vissés, produits par moulage par injection à deux composants à partir des masses de moulage thermoplastiques selon les revendications 1 à 6.
